(19) Europäisches Patentamt

European Patent Office

Office européen des brevets

(11) **EP 0 767 138 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(51) Int. Cl.⁷: **C01B 7/07**

(21) Anmeldenummer: **96115820.1**

(22) Anmeldetag: **02.10.1996**

(54) **Verfahren zur selektiven Abtrennung und Wiedergewinnung von Chlor aus Gasgemischen**

Process for the selective separation and recovery of chlorine from gas mixtures

Procédé de séparation sélective et de récupération de chlore à partir de mélanges gazeux

(84) Benannte Vertragsstaaten:
**BE CH DE ES FR GB IT LI NL**

(30) Priorität: **04.10.1995 DE 19536976**

(43) Veröffentlichungstag der Anmeldung:
**09.04.1997 Patentblatt 1997/15**

(73) Patentinhaber:
**BASF AKTIENGESELLSCHAFT
67056 Ludwigshafen (DE)**

(72) Erfinder:
• **Watzenberger, Otto, Dr.
67059 Ludwigshafen (DE)**
• **Pfeffinger, Joachim
67063 Ludwigshafen (DE)**

(74) Vertreter:
**Isenbruck, Günter, Dr. et al
Patent- und Rechtsanwälte,
Bardehle-Pagenberg-Dost-Altenburg-Geissler-Isenbruck
Theodor-Heuss-Anlage 12
68165 Mannheim (DE)**

(56) Entgegenhaltungen:
**EP-A- 0 329 385        US-A- 4 394 367
US-A- 5 308 383**

**Beschreibung**

Die vorliegende Erfindung bezieht sich auf Verfahren zur Abtrennung und Wiedergewinnung von Chlor aus Gasgemischen.

Es ist bekannt, daß bei der Chlorierung von Organika große Mengen an Chlorwasserstoff gebildet werden. So entstehen beispielsweise bei der Produktion der als Rohstoffbasis für Schaumstoff und Lacke dienenden Isocyanate zwischen 0,5 und 1,0 t Chlorwasserstoff pro Tonne Produkt.

Das Recycling von Chlor aus diesen Prozessen oder anderen Prozeß- oder Spülgasen wird auf unterschiedliche Weise vorgenommen. Bei der Elektrolyse z.B. wird der Chlorwasserstoff zunächst in eine wäßrige Salzsäure überführt und dann elektrolytisch in Chlor und Wasserstoff gespalten, wobei das Chlor konzentriert anfällt.

Kommt hingegen die im Vergleich zur Elektrolyse energetisch günstigere Oxidation des Chlorwasserstoffs zu Chlor und Wasser nach einer der verschiedenen Varianten des Deacon-Verfahrens zum Einsatz, fällt lediglich ein verdünnter Chlorgasstrom mit 10-50 Vol.-% Chlor an. Dieser muß anschließend nachbehandelt werden, da für die chemische Produktion trockenes Chlor mit einer hohen Reinheit über 99 Gew.-% benötigt wird.

Es hat deshalb nicht an Versuchen gefehlt, aus verdünnten Chlorgasströmen das Chlor möglichst vollständig und mit einer hohen Reinheit abzutrennen.

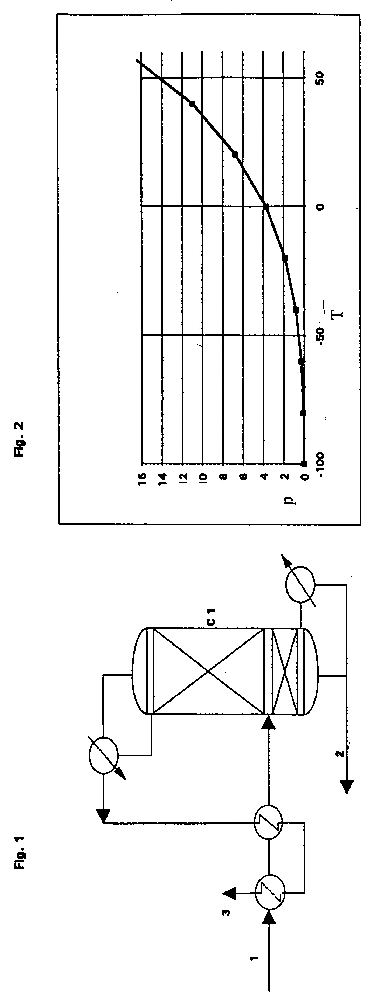

Beispielsweise kann Chlor durch Auskondensation aus einem getrockneten Gasstrom abgetrennt werden (vgl. Taupunktskurve Chlor in Fig. 1, vgl. Ullmann's Enzyklopädie der Ind. Chemie, Chlor, Vol. A6 (1986), 399-481). Da die Kondensationstemperatur T in °C von Chlor druckabhängig ist (vgl. Fig. 2), erfolgt die Kondensation aus wirtschaftlichen Gründen unter Druck p in bar, der aber aus Sicherheitsgründen 5-10 bar nicht überschreiten sollte.

Bei diesem Druck kann Chlor durch Tieftemperaturkondensation aus Gasen mit geringer Chlorkonzentration allerdings nicht wirtschaftlich auskondensiert werden, speziell wenn die zur Zeit gültigen gesetzlichen Emissionswerte in dem Ausgangsgas 3 eingehalten werden sollen. In diesem Fall muß der Gasstrom auf unter -130°C abgekühlt werden, damit eine Chlorkonzentration von 5 mg/m$^3$ im Ausgangsgas 3 (entsprechend einem Partialdruck von 0,16 Pa) nicht überschritten wird. Dies läßt sich nur mit einem sehr hohen Einsatz an Kälteenergie erreichen und ist daher unwirtschaftlich. Die Kondensation stellt daher für großtechnische Anwendungen nur ein Trenn- bzw. Reinigungsverfahren dar, um Chlor aus Chlorgasströme mit sehr hohen Chlorgehalten, vorzugsweise über 95 %, abzutrennen. Das Restchlor im Ausgangsgas 3 wird dann gemäß dem Stand der Technik durch z.B. Auswaschen entfernt.

Eine solche Wäsche zur Restchlorentfernung mit NaOH und/oder Na$_2$SO$_3$ ist beispielsweise in EP-B 0 406 675 beschrieben. Durch die chemische Wäsche wird aber das Chlor einer Wiederverwertung entzogen und es fällt zudem eine entsprechende Menge an Salzen an, die vorschriftsgemäß entsorgt werden muß.

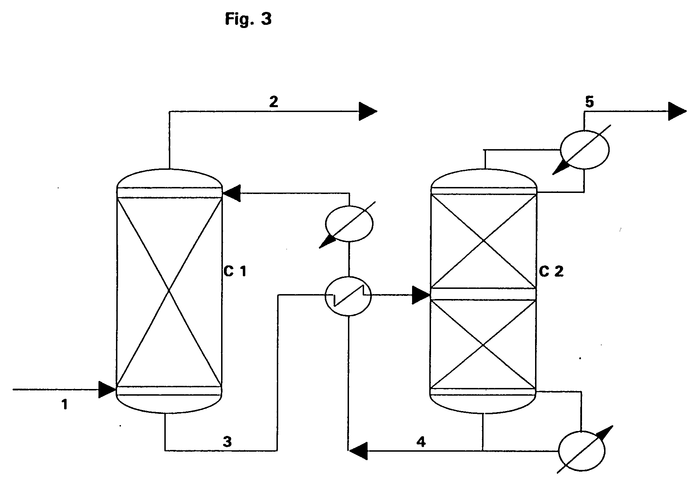

Eine weitere Verfahrensvariante besteht darin, das Chlor mit Hilfe von Absorptionsverfahren (vgl. Fig. 3) zu gewinnen. Bei den Absorptionsverfahren wird das chlorhaltige Zulaufgas 1 in geeigneter Weise in den Boden einer Absorptionskolonne C1 geleitet, die üblicherweise mit Packungsmaterialien (Berl-Sättel, Raschig-Ringe, o.ä.) oder mit geeigneten Kolonnenböden ausgestartet ist. Im Gegenstrom zu dem chlorhaltigen Zulaufgas wird ein Absorptionsmittel, beispielsweise CCl$_4$, Hexachlorbutadien, verschiedene teil- oder vollchlorierte Propane oder S$_2$Cl$_2$

(chemische Wäsche: S$_2$Cl$_2$ + Cl$_2 \rightarrow$ 2 SCl$_2$)

geführt, das das Chlor des Gasstroms aufnimmt. Die Absorption erfolgt bei 0,5 bis 1 bar oder unter Druck, vorzugsweise bei 5-10 bar. Die Zulauftemperatur des Absorptionsmittels 4 am Kopf der Kolonne wird abhängig von dem jeweiligen Absorptionsmittel so gewählt, daß der Restchlorgehalt im Ausgangsgas 2 am Kopf der Kolonne unter dem geforderten Grenzwert liegt. Wird die Temperatur der Absorptionskolonne höher gewählt, ist für die Restchlorentfernung aus dem Ausgangsgas 2 eine Restchlorwäsche, wie oben beschrieben, vorzusehen.

Das mit Chlor beladene Absorptionsmittel 3 wird am Boden der Absorptionskolonne C1 abgezogen und in die Desorptionskolonne C2 geleitet, in der das vom Absorptionsmittel aufgenommene Chlor durch Erhitzen und/oder Druckabsenkung aus dem Absorptionsmittel ausgetrieben wird. Das von Chlor befreite Absorptionsmittel 4 wird am Boden der Desorptionskolonne abgezogen, abgekühlt und in die Absorptionskolonne recycliert. Ein Teil des am Kopf der Desorptionskolonne abgezogenen Chlors 5 wird kondensiert und als Rücklauf wieder in die Kolonne zurückgeführt.

Das aus der Desorptionskolonne abgezogene Chlor 5 enthält nicht unerhebliche Anteile an nichtkondensierbaren Gaskomponenten des Zulaufgases und zusätzlich entsprechend den Druck- und Temperaturverhältnissen am Kopf der Desorptionskolonne größere Menge an Absorptionsmittel, so daß die erzielbare Reinheit für die allermeisten Anwendungszwecke nicht ausreichend und somit eine zusätzliche Reinigung des erhalten Chlors erforderlich ist.

Ein typisches Absorptions-Desorptionsverfahren wird in US 5,308,383 beschrieben. Es ist durch die Verwendung eines speziellen Absorptionsmittels der Summenformel C$_7$F$_3$H$_{4-n}$Cl$_n$ n=1-3, beispielsweise 3,4-Dichlorobenzotrifluorid, gekennzeichnet. Ein Vorteil der Verwendung dieses Absorptionsmittels liegt gemäß US 5,308,383 in dem geringeren Absorptionsmittelverlust von nur 88 mg/kg Gas und in dem im Gegensatz zu CCl$_4$ nicht vorhandenen Ozonzersetzungspotential. Zusätzlich wird in US 5,308,383 angegeben, daß eine Kombination der o.g. Absorptionsmittel mit Chloroform besonders geeignet ist. Dann muß allerdings eine Absorberkopftemperatur von -4°C eingestellt werden, um die Chloroformverluste zu begrenzen, da Chloroform Ozonzersetzungspotential besitzt.

Es ist bekannt, daß die Absorption von Chlor in den üblichen Absorptionsmitteln wie beispielsweise $CCl_4$ durch physikalisches Lösen erfolgt. Da dieser Verfahrensschritt relativ unselektiv ist, wird auch ein gewisser Anteil der anderen Gaskomponenten des Zulaufgases absorbiert. Dementsprechend ist das erhaltene Chlor zwar aufkonzentriert, aber mit anderen Gaskomponenten und Absorptionsmittel verunreinigt und muß einer weiteren Reinigung unterzogen werden, beispielsweise einer Tieftemperaturdestillation.

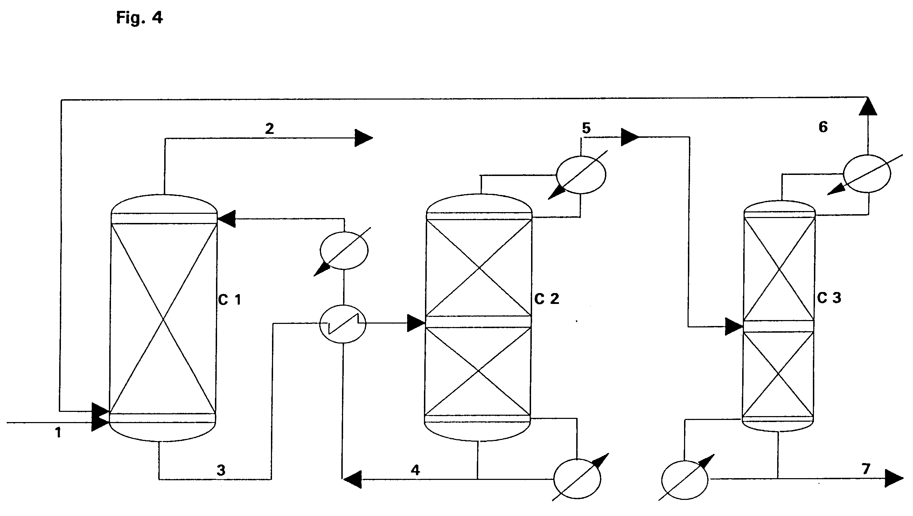

Ein prinzipielles Verfahrensschema der Absorption/Desorption mit nachgeschalteter Tieftemperaturdestillation ist in Fig. 4 dargestellt. In der Absorptionskolonne C1 wird mit Hilfe eines geeigneten Absorptionsmittels 4 Chlor quantitativ aus dem chlorhaltigen Zulaufstrom 1 ausgewaschen. Das beladene Absorptionsmittel 3 wird in eine Desorptionskolonne C2 geleitet, in der Chlor durch Erwärmung des Absorptionsmittels ausgetrieben und über Kopf 5 abdestilliert wird. Das regenerierte Absorptionsmittel 4 wird gekühlt und wieder in die Absorptionskolonne C1 recycliert.

Das über Kopf aus der Desorptionskolonne C2 abgezogene Chlorgas 5 ist wie bereits erläutert von geringer Reinheit und muß daher z.B. durch Auskondensation in einer Tieftemperaturdestillationskolonne C3 gereinigt werden. Die nichtkondensierbaren Gase 6 enthalten noch geringe Mengen an Chlor und werden daher wieder in die Chlorabsorptionskolonne C1 zurückgeführt.

Der Nachteil dieses Verfahrens ist, daß hochreines Chlor 7 nur dann abgezogen werden kann, wenn es gelingt, die Desorptionskolonne so zu betreiben, daß kein Absorptionsmittel über Kopf austritt, da dieses als "Hochsieder" in den Sumpf der Tieftemperaturdestillationskolonne und damit in das abgezogene Chlor 7 gelangen würde.

Gemäß dem Shell-Deacon-Verfahren zur HCl-Oxidation (The Chemical Engineer, (1963) 224-232) erfolgt die Chlorabtrennung über ein Absorptions-/Desorptionsverfahren mit $CCl_4$ als Absorptionsmittel. Aus dem Zulaufgas mit einem Chlorgehalt von 27-48 % in $N_2$, $O_2$ und $CO_2$ (im wesentlichen) wird das Chlor in der Absorptionskolonne bei ca. 1,5 bar und einer Kopftemperatur von ca. 11°C ausgewaschen. Die Chlorfreisetzung aus der Absorptionsflüssigkeit erfolgt in der Desorptionskolonne bei einer Kopftemperatur von ca. 65,5°C und einem Druck von ca. 11 bar. Das freigesetzte Chlor wird zur Reinigung in einem aufgesetzten Wasserkühler unter Druck teilkondensiert. Das nichtkondensierte Chlor und die darin noch enthaltenen anderen Gaskomponenten werden zur Absorptionskolonne zurückgeführt. Eine ähnliche Verfahrensvariante wird in US 4,394,367 beschrieben.

In der US 2,271,056 wird der Einbau einer Schicht aus Aktivkohle in den Oberteil der Absorptionskolonne vorgeschlagen, um den Austrag an $CCl_4$ zu verhindern. Nachteilig ist, daß die Aktivkohle nur eine begrenzte Adsorptionsfähigkeit hat und dann ausgetauscht werden muß.

Eine alternativer Verfahrensvorschlag zur Chlorabtrennung durch Absorption und anschließender Desorption wird in EP-B 0 329 385 beschrieben und ist in der Fig. 5 dargestellt. Bei dieser Verfahrensvariante wird dem ursprünglichen, chlorhaltigen Zulaufgas 1 mit einer Chlorkonzentration von ca. 10-30 Gew.-% das Chlor 2 aus der Chlordesorption (ca. 90 Gew.-% Chlor) zugegeben. Dadurch erhöht sich die Chlorkonzentration im Zulaufstrom 3 auf deutlich über 50 Gew.-%. Dieser Gasstrom 3 wird auf 5-9 bar komprimiert und anschließend ein- oder mehrstufig gekühlt, so daß ein Großteil des enthaltenen Chlors auskondensiert. Das auskondensierte Chlor wird der Tieftemperaturdestillationskolonne C1 zugeführt, um die gelösten Fremdgase abzutrennen. Das so abgetrennte und gereinigte Chlor 9 kann wiederverwendet werden. Die nichtkondensierbaren Gase 7 aus der Tieftemperaturdestillationskolonne C1 enthalten noch Chlor und werden daher mit dem nichtkondensierbaren Gasstrom aus der vorangegangenen Kondensation 6 zusammengeführt und in die Absorptionskolonne C2 geleitet, in welcher das Chlor absorptiv von den nichtkondensierbaren Gaskomponenten abgetrennt wird. Das beladene Absorptionsmittel 11 wird in einer Desorptionskolonne C3 durch Auskochen des Chlors regeneriert. Das dabei desorbierte Chlor 2 ist von geringer Reinheit (ca. 90 Gew.-% Chlor). Es enthält noch größere Mengen an nichtkondensierbaren Gasen, die ebenfalls in dem Absorptionsmittel gelöst waren. Dieser Chlorstrom 2 wird dem chlorhaltigen Zulaufgas 1 zugesetzt.

Das Verfahren ist nur für die Chlorrückgewinnung aus chlorhaltigen Gasströmen 1 mit Chlorgehalten deutlich über 10 Vol.-% vorteilhaft einsetzbar, da ansonsten unwirtschaftlich große Chlormengen ständig zwischen Absorption/Desorption und Kondensation im Kreis gefahren werden müssen.

Nachteilig ist außerdem, daß sich das Verfahren nicht zur Gewinnung von hochreinem Chlor eignet, da das aus der Desorptionskolonne C3 stammende, chlotreiche Gasgemisch 2 geringe Mengen an Absorptionsmittel enthält. Durch die Zumischung des Gasgemisches zum Zulaufgas 1 gelangt das Absorptionsmittel in den Kondensationsteil und über diesen in die Tieftemperaturdestillation, in der es als Hochsieder zusammen mit dem Chlor aus dem Sumpf der Kolonne abgezogen wird. Energetisch unvorteilhaft an dieser Verfahrensvariante ist darüber hinaus, daß der gesamte nichtkondensierbare Gasanteil auf die tiefe Chlorkondensationstemperatur abgekühlt werden muß.

In EP-A 0 518 553 wird eine Tieftemperaturdestillation mit nachfolgender Vakuum-Druckwechseladsorption zur Chlorabtrennung beschrieben.

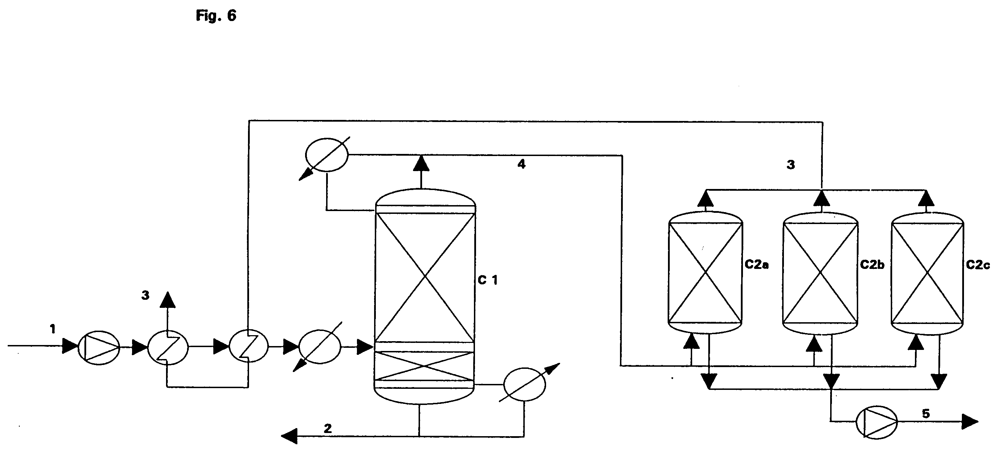

Das Zulaufgas 1 wird komprimiert und, wie in Fig. 6 dargestellt, zunächst mit dem chlorfreien Ausgangsgas 3 abgekühlt und dann der Kondensation bzw. Tieftemperaturdestillation C1 zugeführt, in der ein Teil 2 des enthaltenen Chlors im Sumpf flüssig und rein abgezogen werden kann. Das verbleibende chlorhaltige Gas 4 verläßt die Kolonne C1 über Kopf und wird in die Vakuum-Druckwechseladsorptions (V-DWA)-Behälter C2 geleitet. In den Adsorptionsbehältern C2a bis C2c erfolgt alternierend bei etwa 4-11 bar und 0-150°C, vorzugsweise Umgebungstemperatur, die adsorptive Abtrennung des Chlors von den Restgasen. Durch anschließendes Anlegen von Vakuum wird bei erniedrigtem Druck von 1-60 kPa alternierend zur Adsorption aus den Adsorptionstürmen hochkonzentriertes Chlor 5 gewonnen. Nach der Desorption des adsorbierten Chlors stehen die Adsorptionsbehälter wieder für eine erneute Beladung zur Verfügung. Als Adsorptionsmittel können synthetische oder natürliche Zeolithe (X-, Y-, L-, ZSM-) oder nichtzeolithische poröse Oxide und vorzugsweise auf Kohlenstoff basierende Adsorbentien wie Aktivkohle und Kohlenstoffmolekularsiebe eingesetzt werden.

Diese Verfahrensweise ist jedoch nicht geeignet, das gesamte Chlor aus dem Zulaufgas in hochreiner Form zu gewinnen, da die im Adsorptionsbehälter befindliche Gasphase noch alle Gaskomponenten des Gasstroms 4 enthält und außerdem nicht nur Chlor, sondern auch andere Komponenten des Gases ebenfalls teilweise adsorbiert werden. Diese Komponenten gelangen beim Anlegen des Vakuums zusammen mit dem desorbierenden Chlor in den aus den Adsorptionsbehältern austretenden Chlorstrom 5.

Nur das aus der Kondensation/Tieftemperaturabtrennung stammende Chlor 2 wird rein gewonnen. Aufgrund der technisch und wirtschaftlich limitierten Kühltemperatur ist dies, abhängig von der Chlorkonzentration des Eingangsgases, aber nur ein begrenzter Anteil. Um alles Chlor über eine V-DWA rein zu gewinnen, muß das abgetrennte Chlor 5 einer weiteren Reinigungsstufe unterzogen werden.

Die Vorschaltung einer Kondensation/Tieftemperaturdestillation vor die V-DWA hat außerdem den Nachteil, daß der gesamte anfallende chlorhaltige Zulaufgasstrom auf den hohen Chlorkondensationsdruck (5-20 bar) komprimiert und auf die entsprechende Chlorkondensationstemperatur gekühlt werden muß.

Es stellt sich deshalb die Aufgabe, Verfahren zur Entfernung von Chlor aus chlorhaltigen Gasströmen zu finden, mit denen das Chlor vollständig und hochrein abgetrennt werden kann, die energetisch optimiert sind, mit einer minimalen Anzahl an Apparaten auskommen und deren, die Chlorabtrennungsanlage verlassendes Ausgangsgas frei von Absorptionsmitteln und nahezu frei von Chlor ist.

Die Aufgabe wird gelöst durch ein Verfahren zur Abtrennung von Chlor hoher Reinheit aus einem chlorhaltigen Zulaufgas durch Absorption des Chlors mit einem inerten Absorptionsmittel und nachgeschalteter Desorption des Chlors aus dem aus der Absorption abgezogenen Absorptionsmittel/Chlorgemisch durch dessen Zufuhr zu einer Desorptionsdestillationskolonne, indem die Desorptionsdestillation in einer Desorptionsdestillationskolonne durchgeführt wird, die mit einer Chlorabtrennkolonne derart gekoppelt ist, daß der Kopf der Chlorabtrennkolonne und ein oberer Teil der Desorptionsdestillationskolonne und ein unterer Teil der Desorptionsdestillationskolonne und der Sumpf der Chlorabtrennkolonne sowohl gas- als auch flüssigkeitsseitig miteinander verbunden sind und die Zufuhr des Absorptionsmittel/Chlor-Gemisches ausschließlich in die Desorptionsdestillationskolonne erfolgt und hochreines Chlor aus einem mittleren Bereich der Chlorabtrennkolonne abgezogen wird.

Bevorzugte Ausführungsformen der Erfindung werden im folgenden erläutert und sind in der Zeichnung dargestellt. Es zeigen:

Fig. 1      eine schematische Darstellung einer Chlorabtrennung;

Fig. 2      eine Taupunktskurve für Chlor;

Fig. 3      eine Absorptions-Desorptions-Anlage zur Chlorgewinnung;

Fig. 4      eine schematische Darstellung wie Fig. 3 mit Chlorreindestillation;

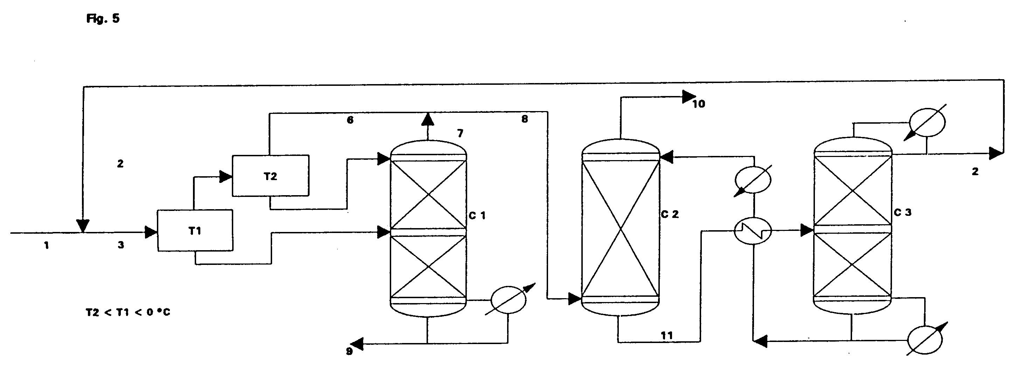

Fig. 5      eine schematische Darstellung des Gesamtverfahrens;

Fig. 6      eine schematische Darstellung einer Chlorgewinnungsanlage mit Druckwechseladsorption;

Fig. 7      eine schematische Darstellung einer Chlorgewinnungsanlage mit Chlorseitenkolonne;

Fig. 8      eine schematische Darstellung einer Chlorgewinnungsanlage mit Trennwandkolonne;

Fig. 9      eine Fig. 8 entsprechende Darstellung einer Ausgangsgasaufbereitung; und

Fig. 10     eine schematische Darstellung einer Chlorgewinnungsanlage mit der Druckwechseladsorption nachgeschalteter Tieftemperaturdestillation.

In einer vorteilhaften Ausführungsform des erfindungsgemäßen Verfahrens wird die Desorptionsdestillation in einer Desorptionsdestillationskolonne mit einer Seitenkolonne als Chlorabtrennkolonne durchgeführt.

In einer weiteren vorteilhaften Ausführungsform des erfindungsgemäßen Verfahrens werden die Desorptionsdestillationskolonne und die Chlorabtrennkolonne in einer Kolonne integriert, die teilweise eine in Längsrichtung wirksame Trenneinrichtung, z.B. eine Trennwand, aufweist, welche den Querschnitt der Kolonne in einen Zulauf- und einen Entnahmeteil aufteilt, wobei das Chlor/Absorptionsmittel-Gemisch in den Zulaufteil gegeben und flüssiges Chlor aus dem Entnahmeteil abgezogen wird.

In einer besonders vorteilhaften Ausführung des erfindurgsgemäßen Verfahrens wird aus dem aus der Chlorabsorption austretenden Ausgangsgas das Chlorabsorptionsmittel abgetrennt, indem der aus der Absorption austretende Gasstrom mit Hilfe einer, bevorzugt inerten, Waschflüssigkeit, welche bei Raumtemperatur einen Dampfdruck von weniger als 10 mbar, bevorzugt weniger als 1 mbar, aufweist, gewaschen und die beladene Waschflüssigkeit zur Regeneration in einer Destillationskolonne bei einem Druck von 0,1-5 bar, bevorzugt 1-2 bar destilliert wird, wobei aus dem Sumpf die Waschflüssigkeit abgezogen und, bevorzugt in die Waschstufe, zurückgeführt wird und die über Kopf gehenden Abgase der Chlorabsorption zugeführt werden. Es ist erfindungsgemäß auch möglich, daß die Restchlor- bzw. Rest-Absorptionsmittelentfernung aus dem Ausgangsgas der Absorptionskolonne durch geeignete Adsorptionsverfahren (z.B. Adsorption von Chlor und $CCl_4$ an Aktivkohle) durchgeführt wird.

Eine weitere erfindungsgemäße Lösung zur Abtrennung von Chlor aus einem chlorhaltigen Gasstrom besteht darin, daß das Chlor mittels einer Druckwechseladsorption vollständig oder nahezu vollständig aus dem Gasstrom abgetrennt wird, das hoch chlorhaltige Gas aus der Druckwechseladsorption auf einen Druck von 1-20 bar, bevorzugt 5-10 bar, komprimiert und bevorzugt anschließend einer Tieftemperaturdestillation unterworfen wird, Chlor in reiner Form als Sumpfprodukt der Destillationskolonne abgetrennt und das Kopfprodukt der Destillationskolonne in den Zulaufgasstrom der Druckwechseladsorption zurückgeführt wird.

Mit dem erfindungsgemäßen Verfahren lassen sich folgende Vorteile erzielen:

- Die vollständige Abtrennung von Chlor aus chlorhaltigen Gasströmen mit einem minimalen apparativen und energetischen Aufwand. Dies gilt insbesondere für die Gewinnung von Chlor aus stark verdünnten Chlorgasströmen, wie sie bei der Oxidation von HCl mit Sauerstoff nach dem Deacon-Verfahren anfallen.

- Das abgetrennte Chlor ist von hoher Reinheit und kann in den Produktionsprozeß recycliert werden. So kann das Chlor wieder zur Herstellung von Phosgen, das bei der Isocyanat-Produktion benötigt wird, verwendet werden.

- Ein Chlorabsorptionsmittel wird entweder, wie im Fall der Vakuum-Druckwechseladsorption, gar nicht benötigt oder verbleibt ohne Verluste an die Umwelt im Prozeß.

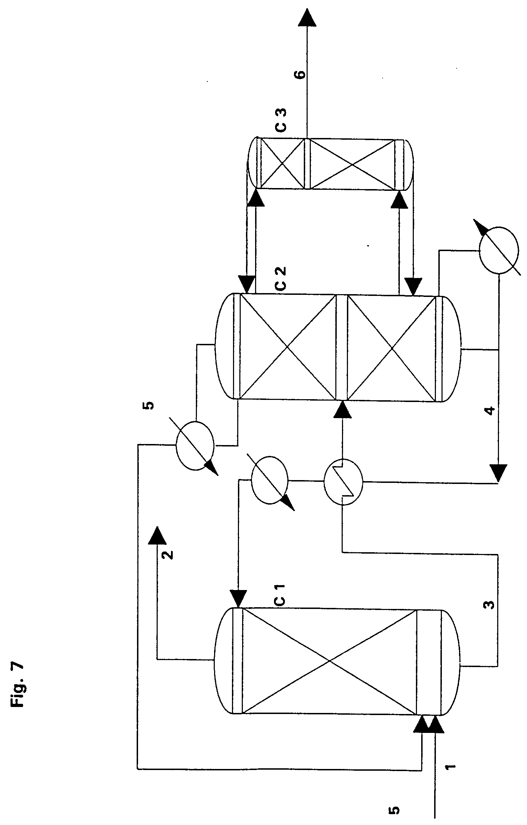

Eine vorteilhafte Form des erfindungsgemäßen Verfahrens um hochreines Chlor zu erhalten zeigt die Fig. 7. Das Zulaufgas 1 wird in geeigneter Weise in den Boden einer Absorptionskolonne C1 geleitet, die üblicherweise mit Packungsmaterialien (Berl-Sättel, Raschig-Binge, o.ä.) oder mit geeigneten Kolonnenböden ausgestattet ist. Im Gegenstrom zu dem chlorhaltigen Zulaufgas wird ein Absorptionsmittel 4 geführt, das das Chlor des Gasstroms aufnimmt, der anschließend als Ausgangsgas 2 über Kopf der Absorptionskolonne aus der Anlage geleitet wird. Das mit Chlor beladene Absorptionsmittel 3 wird in eine Desorptionsdestillationskolonne C2 geleitet, in der das Chlor wieder abdestilliert und das von Chlor befreite Absorptionsmittel 4 am Boden der Desorptionsdestillationskolonne abgezogen, gekühlt und in die Absorptionskolonne recycliert wird. Aus dem unteren Teil der Desorptionsdestillationskolonne C2 werden Brüden abgezogen und in den Sumpf einer Seitenkolonne, der Chlorabtrennkolonne, C3 geleitet. Aus dem oberen Teil der Desorptionsdestillationskolonne C2 wird Flüssigkeit abgezogen und auf den Kopf der Seitenkolonne C3 geleitet. Der Brüdenabzug der Seitenkolonne C3 wird an der Stelle der Flüssigkeitsentnahme in die Desorptionsdestillationskolonne C2 zurückgeführt, der Sumpfabzug der Seitenkolonne wird an der Stelle der Brüdenentnahme in die Desorptionsdestillationskolonne zurückgeleitet. Aus dem Mittelteil der Seitenkolonne kann flüssiges Chlor 6 in hochreiner Form, restgas- und absorptionsmittelfrei abgezogen werden. Die im beladenen Absorptionsmittel 3 mitgelösten Restgaskomponenten und geringe Mengen an Chlor verlassen die Desorptionsdestillationskolonne über Kopf 5 und werden in die Absorptionskolonne C1 zurückgeleitet.

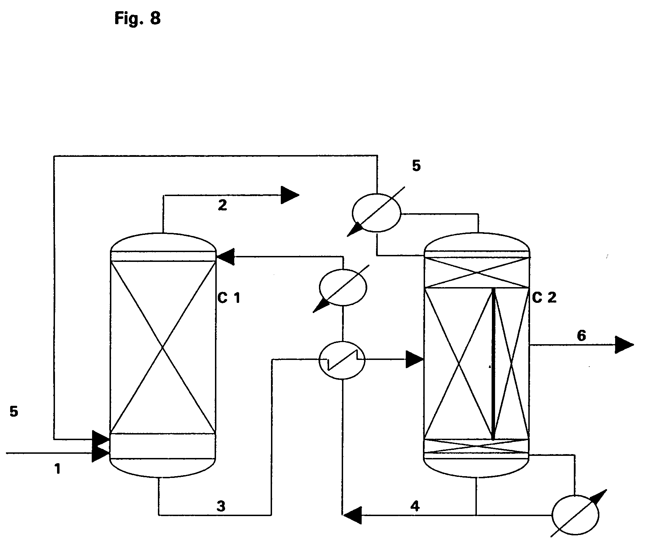

Eine besonders vorteilhafte Ausgestaltung des erfindungsgemäßen Verfahrens, um hochreines Chlor zu erhalten, wird in der Fig. 8 gezeigt. Aus dem Zulaufgas wird Chlor, wie in Fig. 7 dargestellt, mit der Absorptionskolonne C1 abgetrennt und aus dem Absorptionsmittel in der Desorptionsdestillationskolonne C2 wieder abdestilliert. Die Desorptionsdestillationskolonne ist als Trennwandkolonne ausgeführt. Dies entspricht im Prinzip einer Integration der in Fig. 7 beschriebenen Seitenkolonne, der Chlorabtrennkolonne, in die Desorptionsdestillationskolonne. In dem durch die Trennwand abgetrennten Bereich der Kolonne stellt sich ein Konzentrationsprofil wie in der Seiterkolonne ein. Abhängig von der Zusammensetzung des beladenen Absorptionsmittels und der Ausführungsform der Kolonne ergibt sich die optimale Höhe, in der hochreines, flüssiges Chlor 6 abgezogen werden kann. Die Höhe der Trennwand sollte mehr als 5 theoretische Böden, maximal aber die gesamte, vorzugsweise 10-90%, besonders bevorzugt 60-70% der Höhe des effektiven Teils der Desorptionsdestillationskolonne haben. Dies gilt auch, wenn die Chlorabtrennkolonne als Seitenkolonne vorliegt. Unterhalb und oberhalb der Trennwand sind die beiden Kolonnen gas- und flüssigkeitsseitig miteinander verkoppelt. Durch die Anwendungen der Trennwandkolonne anstelle einer Seitenkolonne wird ein Trennapparat eingespart und es resultiert eine erhebliche Energieeinsparung.

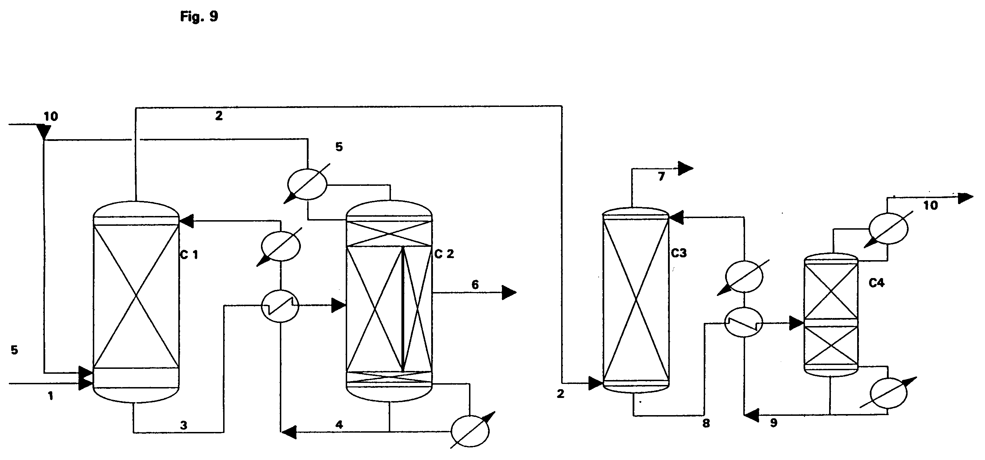

Eine andere besonders günstige Ausführungsform des erfindungsgemäßen Verfahrens, in der neben der Abtrennung von hochreinem Chlor gemäß Fig. 8 auch noch das Ausgangsgas 2 aus der Absorptionskolonne von gegebenenfalls noch enthaltenem Chlorabsorptionsmittel befreit wird, ist in Fig. 9 dargestellt.

Das über Kopf der Absorptionskolonne C1 geführte Ausgangsgas 2 enthält gegebenenfalls noch etwas Chlorabsorptionsmittel wie beispielsweise $CCl_4$, das in der Absorptionskolonne C3 mittels einer geeigneten Waschflüssigkeit 9, beispielsweise cis- oder trans-Decalin oder einem anderen entsprechenden Hochsieder, vollständig ausgewaschen wird. Das Reingas 7 aus der Absorptionskolonne C3 kann an die Umwelt abgegeben oder in den Prozeß zur Oxidation von HCl mit $O_2$ zurückgeführt werden. Aus der beladenen Waschflüssigkeit 8 wird in einer nachgeschalteten Desorptionskolonne C4 das Chlorabsorptionsmittel wieder abdestilliert und die Waschflüssigkeit als Sumpfprodukt 9 abgezogen, abgekühlt und in die Absorption C3 zurückgeführt. Als Kopfprodukt 10 wird ein Gasgemisch erhalten, das der Absorptionskolonne C1 beispielsweise zusammen mit Strom 5, zugeleitet wird.

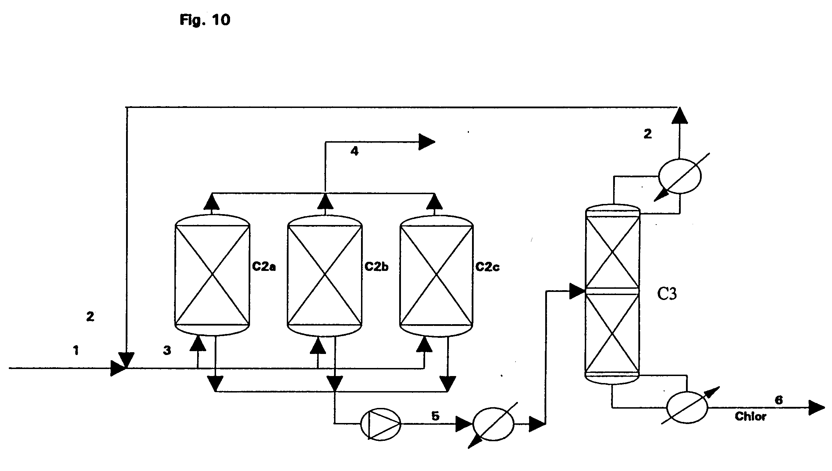

Gemäß eines weiteren erfindungsgemäßen Verfahrens zur Wiedergewinnung von hochreinem Chlor wird mit Hilfe der Vakuum-Druckwechseladsorption (V-DWA) Chlor aus einem chlorhaltigen Eingangsgas, wie in der Fig. 10 dargestellt, abgetrennt. Das Zulaufgas 1 wird zunächst komprimiert. Die Abtrennung des Chlors von den Restgasen erfolgt zyklisch in den Behältern C2a bis C2c durch Adsorption. Durch anti-zyklisches Anlegen von Vakuum wird aus den Adsorptionstürmen hochkonzentriertes Chlor 5 gewonnen. Nach der Desorption des anhaftenden Chlors stehen die Adsorbertürme wieder für die erneute Beladung zur Verfügung. Die im Adsorptionsbehälter befindliche Gasphase enthält noch alle Gaskomponenten des Eingangsgases. Diese gelangen beim Anlegen des Vakuums zusammen mit dem desorbierten Chlor in den aus den Adsorptionsbehältern austretenden Chlorstrom 5, der komprimiert und nach Abkühlung dann in eine Tieftemperaturdestillation C3 geleitet wird. In dieser erfolgt die Abdestillation der noch enthaltenen unerwünschten Gaskomponenten. Aus dem Sumpf der Kolonne kann hochreines Chlor 6 flüssig abgezogen werden. Die über Kopf abgezogenen Restgase 2 enthalten noch Chlor und werden in die V-DWA zurückgeführt. Es handelt sich allerdings nur um einen geringen Restgasstrom.

## BEISPIELE

Vergleichsbeispiel V1:

Absorptions-Desorption (Verfahren entsprechend Fig. 3)

Ein chlorhaltiger Gasstrom mit einer Zusammensetzung von 17,1 Gew.-% $Cl_2$, 0,5 Gew.-% HCl und 82,4 Gew.-% $N_2+O_2$ wurde mit einem Volumenstrom von 100 l/h bei einem Druck von 700 kPa und einer Temperatur von 0°C (= 1,1 kg Gas /h; = 0,2 kg $Cl_2$/h ) der Absorptionskolonne zugeführt. Die Absorptionskolonne hatte einen Innendurchmesser von 40 mm und eine Gesamthöhe von 1,3 m. Als Kolonneneinbauten wurden 5 x 5 mm Pallringe in einer Schütthöhe von 1,0 m verwendet. Am Kopf der Kolonne wurde flüssiges $CCl_4$ mit einer Temperatur von -20°C in einer Menge von 2,7 kg/h aufgegeben. Das mit Chlor beladene Absorptionsmittel wurde einer Desorptionskolonne mit 40 mm Innendurchmesser, 1,5 m Gesamthöhe und 1,3 m Pallringschüttung (5 x 5 mm) zugeführt. Bei einem Druck von 700 kPa wurde bei einer Sumpftemperatur von 160°C und einer Kopftemperatur von 16°C als Kopfprodukt der Desorptionskolonne ein Chlorgas mit einer Reinheit von ca. 92 Gew.-% erhalten. Die Konzentrationen der Einzelkomponenten in Gasen und Flüssigkeiten sind aus Tabelle 1 zu entnehmen.

Tabelle 1

| Gas- und Flüssigkeitskonzentrationen bei der Chlorgewinnung durch Absorption/Desorption bei einem Druck von jeweils 700 kPa | | | | | |
|---|---|---|---|---|---|
| | 1 Zulauf | 2 Ausgangsgas | 3 Abs.-mittel (bel.) | 4 Abs.-mittel (reg.) | 5 Chlor |
| kg/h | 1,0 | 0,82 | 2,87 | 2,7 | 0,18 |
| [Gew.-%] | | | | | |
| Chlor | 17,1 | 0,40 | 5,80 | 0,00 | 92,2 |
| $CCl_4$ | 0,00 | 1,00 | 93,7 | 100 | 0,00 |
| Restgas | 82,9 | 98,6 | 0,50 | 0,00 | 7,80 |

Das erhaltene Chlorgas besitzt nur eine Reinheit von ca. 92 Gew.-%, so daß es einer weiteren Reinigungsstufe (Destillation) zugeführt werden muß. Das Abgas aus der Absorptionskolonne enthält neben 0,4 Gew.-% Chlor noch 1,0 Gew.-% $CCl_4$.

Beispiel 1:

Absorption und Desorption mit Chlorreindestillation in einer Seitenkolonne (Verfahren gemäß Fig. 7)

Ein chlorhaltiger Gasstrom mit einer Zusammensetzung von 17,1 Gew.-% $Cl_2$, 0,5 Gew.-% HCl und 82,4 Gew.-% $N_2+O_2$ wurde mit einem Volumenstrom von 100 l/h bei einem Druck von 700 kPa und einer Temperatur von 0°C (= 1,0 kg/h) zusammen mit einem Rückgasstrom aus der Desorptionsdestillationskolonne der Absorptionskolonne zugeführt. Die Absorptionskolonne hatte einen Innendurchmesser von 40 mm und eine Gesamthöhe von 1,3 m. Als Kolonneneinbauten wurden 5 x 5 mm Pallringe in einer Schütthöhe von 1,0 m verwendet. Am Kopf der Kolonne wurde flüssiges $CCl_4$ mit einer Temperatur von -20°C in einer Menge von 3,0 kg/h aufgegeben. Das mit Chlor beladene Absorptionsmittel wurde dem mittleren Teil einer Desorptionsdestillationskolonne mit 40 mm Innendurchmesser, 1,5 m Gesamthöhe und 1,3 m Pallringschüttung (5 x 5 mm) zugeführt. Bei einem Druck von 700 kPa wurde bei einer Sumpftemperatur von 160°C und einer Kopftemperatur von 5 °C als Kopfprodukt ein Chlorgas mit einer Reinheit von ca. 78 Gew.-% erhalten, welches in den Zulaufgasstrom der Absorptionskolonne zurückgeführt wurde. Aus der Desorptionsdestillationskolonne wurde in Höhe von 0,35 m (von unten gerechnet) Brüden und in Höhe von 1,15 m (von unten gerechnet) Flüssigkeit entnommen und beides einer Seitenkolonne, der Chlorabtrennkolonne, mit 40 mm Innendurchmesser, 1,0 m Gesamthöhe und 0,8 m Füllkörperhöhe (5 x 5 mm Pallringe) zugeführt. Aus dieser Seitenkolonne wurde im mittleren Bereich Chlor flüssig abgezogen. Das Sumpf- und das Kopfprodukt der Seitenkolonne wurden der Desorptionsdestillationskolonne auf den jeweiligen Entnahmeböden zugeführt. Die Konzentrationen der Einzelkomponenten in Gasen und Flüssigkeiten sind aus Tabelle 2 zu entnehmen.

Tabelle 2

| Gas- und Flüssigkeitskonzentrationen bei der Chlorgewinnung durch Absorption/Desorption mit Chlorabtrennung in einer Seitenkolonne bei einem Druck von jeweils 700 kPa | | | | | | |
|---|---|---|---|---|---|---|
| | 1 Zulauf | 2 Ausgangsgas | 3 Abs.-mittel (bel.) | 4 Abs.-mittel (reg.) | 5 Rückgas | 6 Chlor |
| kg/h | 1,0 | 0,84 | 3,2 | 2,95 | 0,07 | 0,17 |
| [Gew.-%] | | | | | | |
| Chlor | 17,1 | 0,40 | 7,00 | 0,00 | 77,7 | 100 |
| $CCl_4$ | 0,00 | 1,00 | 92,5 | 100 | 0,00 | 0,00 |
| Restgas | 82,9 | 98,6 | 0,50 | 0,00 | 22,3 | 0,00 |

Beispiel 2

Absorption und Desorption in einer Trennwandkolonne (Verfahren gemäß Fig. 8)

Ein chlorhaltiger Gasstrom mit einer Zusammensetzung von 17,1 Gew.-% $Cl_2$, 0,5 Gew.-% HCl und 82,4 Gew.-% $N_2+O_2$ wurde mit einem Volumenstrom von 100 l/h bei einem Druck von 700 kPa und einer Temperatur von 0°C (= 1,0 kg/h) zusammen mit einem Rückgasstrom aus der Desorptionsdestillationskolonne der Absorptionskolonne zugeführt. Die Absorptionskolonne hatte einen Innendurchmesser von 40 mm und eine Gesamthöhe von 1,3 m. Als Kolonneneinbauten wurden 5 x 5 mm Pallringe in einer Schütthöhe von 1,0 m verwendet. Am Kopf der Kolonne wurde flüssiges $CCl_4$ mit einer Temperatur von -20°C in einer Menge von 3,0 kg/h aufgegeben. Das mit Chlor beladene Absorptionsmittel wurde dem mittleren Teil einer Desorptionsdestillationskolonne mit 40 mm Innendurchmesser, 1,5 m Gesamthöhe und 1,3 m Pallringschüttung (5 x 5 mm) zugeführt. In dieser Kolonne befand sich in einer Packungshöhe von 0,35 m bis 1,15 m (jeweils von unten gerechnet) eine vertikale Trennwand. Bei einem Druck von 700 kPa wurde bei einer Sumpftemperatur von 160°C und einer Kopftemperatur von 5°C als Kopfprodukt ein Chlorgas mit einer Reinheit von ca. 78 Gew.-% erhalten, welches in den Zulaufgasstrom der Absorptionskolonne zurückgeführt wurde. Aus dem mittleren Teil der Desorptionsdestillationskolonne auf der der Zulaufstelle gegenüberliegenden Seite der Trennwand wurde Chlor flüssig abgezogen. Die Konzentrationen der Einzelkomponenten in Gasen und Flüssigkeiten sind aus Tabelle 3 zu entnehmen.

Tabelle 3

| | 1 Zulauf | 2 Ausgangsgas | 3 Abs.-mittel (bel.) | 4 Abs.-mittel (reg.) | 5 Rückgas | 6 Chlor |
|---|---|---|---|---|---|---|
| Gas- und Flüssigkeitskonzentrationen bei der Chlorgewinnung durch Absorption/Desorption in einer Trennwandkolonne bei einem Druck von jeweils 700 kPa. | | | | | | |
| kg/h | 1,0 | 0,84 | 3,2 | 2,95 | 0,07 | 0,17 |
| [Gew.-%] | | | | | | |
| Chlor | 17,1 | 0,40 | 7,00 | 0,00 | 77,7 | 100 |
| $CCl_4$ | 0,00 | 1,00 | 92,5 | 100 | 0,00 | 0,00 |
| Restgas | 82,9 | 98,6 | 0,50 | 0,00 | 22,3 | 0,00 |

Beispiel 3

Absorptive Abtrennung von Chlorabsorptionsmitte (Verfahren gemäß Fig. 9)

Das Ausgangsgas 2 aus der Chlorabsorptionskolonne wurde in einer Menge von 0,84 kg/h, einer Temperatur von -15°C und einer Zusammensetzung von 1,0 Gew.-% $CCl_4$, 0,4 Gew% $Cl_2$ und 98,6 Gew% Restgasen ($N_2 + O_2$, Spuren HCl) wurde in eine mit Pallringen gefüllte Absorptionskolonne C3 geleitet. Die Kolonne hatte einen Innendurchmesser von 30 mm und eine Höhe der Pallringe von 1,0 m. Am Kopf der Kolonne wurden 0,12 kg/h 20°C kaltes cis-Decalin als Waschflüssigkeit aufgegeben und damit das Chlorabsorptionsmittel $CCl_4$ bei einem Betriebsdruck von 650 kPa bis auf einen Restgehalt von unter 1 ppm ausgewaschen. Die beladene Waschflüssigkeit wurde in den mittleren Teil einer mit Füllkörpern gefüllte Destillationskolonne geleitet. Die Destillationskolonne hatte einen Innendurchmesser von 50 mm und eine Gesamthöhe (Höhe der Füllkörper) von 1,5 m. Als Füllkörper wurden 5 x 5 mm Pallringe verwendet. Bei einem Druck von 100 kPa wurde bei einer Sumpftemperatur von 200°C und einer Kopftemperatur von -35°C als Sumpfprodukt cis-Decalin mit einer Reinheit von > 99,9 Gew.-% erhalten, welches nach Abkühlen auf 20°C in die Wäsche zurückgeführt wurde. Als Kopfprodukt wurde ein Gasstrom mit 2,6 Gew.-% $Cl_2$, 93,8 Gew % $CCl_4$ und 3,5 Gew.-% Restgasen ($N_2 + O_2$, HCl) erhalten, welcher der Absorption zugeleitet wurde. Die Konzentrationen der Einzelkomponenten in Gasen und Flüssigkeiten sind aus Tabelle 4 zu entnehmen.

Tabelle 4

| | 2 Ausgangsgas | 7 Reingas | 8 Lösemittel (bel.) | 10 Abgas | 9 Lösemittel (reg.) |
|---|---|---|---|---|---|
| Gas- und Flüssigkeitskonzentrationen bei der Ausgangsgasreinigung durch Absorption und Destillation in einer Trennwandkolonne bei einem Druck von jeweils 650 kPa (Absorption) und 100 kPa (Destillation) | | | | | |
| kg/h | 0,84 | 0,83 | 0,08 | 0,01 | 0,07 |
| [Gew.-%] | | | | | |
| Chlor | 0,40 | 0,40 | 0,30 | 2,6 | 0,00 |
| $CCl_4$ | 1,00 | 0,00 | 10,7 | 93,8 | 0,00 |
| Declin | | 0,00 | 88,6 | 0,00 | 100 |
| Restgas | 98,6 | 96,6 | 0,40 | 3,5 | 0,00 |

Beispiel 4

Vakuum-Druckwechseladsorption mit nachfolgender Tieftemperaturabtrennung (Verfahren gemäß Fig. 10)

Ein unter Druck (500 kPa) stehendes, 25 °C warmes chlorhaltiges Gas mit 17 Gew.-% $Cl_2$ und 83 Gew.-% Inertgasen ($N_2 + O_2$) wurde über ein mit einem Adsorptionsmitel auf Zeolithbasis gefülltes Adsorberbett geleitet. Die Belastung (Raumgeschwindigkeit = 120 $h^{-1}$) wurde so gewählt, daß das austretende Gas frei von Chlor war. Die Beladungsdauer betrug 8 Minuten. Dabei wurde das Adsorberbett nicht vollständig beladen, um einen Chlordurchbruch zu vermeiden. Nach Beendigung der Beladung wurde der chlorhaltige Gasstrom auf ein zweites Adsorberbett umgeschaltet. Das erste Adsorberbett wurde anschließend in die Rohchlorleitung entspannt und dann mit einer Vakuumpumpe auf einen Druck von 2 kPa evakuiert. Der Unterdruck wurde ca. 5 min aufrechterhalten, um eine möglichst vollständige Desorption des gespeicherten Chlors zu gewährleisten. Das aus dem Adsorberbett abgezogene Rohchlor (80 - 90 Vol.-%) wurde auf 800 kPa komprimiert, auf 25°C abgekühlt und in die Chlorkondensationskolonne geleitet, deren Kopftemperatur -50°C betrug. Am Sumpf der Kolonne wurde flüssiges Chlor, mit > 99,0 Gew.-% Chlor, abgezogen. Die aus der Chlorkondersationskolonne über Kopf abgezogenen Restgase werden dem Zulaufstrom der Adsorberbetten zugeführt.

| Bezeichnungen in den Figuren: | | | |
|---|---|---|---|
| **Fig. 1** | | **Fig. 2** | |
| 1 | Zulauf | p | Druck in bar |
| 2 | Chlor | T | Temperatur in °C |
| 3 | Ausgangsgas | | |
| **Fig. 3,4** | | **Fig. 5** | |
| 1 | Zulauf(gas) | 1 | Zulaufgas |
| 2 | Ausgangsgas | 2 | Chlor, chlorreiches Gasgemisch |
| 3 | Absorptionsmittel | 3 | Zulaufstrom, Gasstrom |
| 4 | Absorptionsmittel | C1 | Tieftemperaturdestillationskolonne |
| 5 | Chlor(gas) | C2 | Absorptionskolonne |
| C1 | (Chlor)Absorptionskolonne | 6,7 | nichtkondensierbare Gase |
| C2 | Desorptionskolonne | C3 | Desorptionskolonne |
| 6 | nichtkondensierbare Gase | 9 | Chlor |
| C3 | Tieftemperaturdestillationskolonne | 10 | Ausgangsgas |
| 7 | (hochreines) Chlor | 11 | Absorptionsmittel |
| **Fig. 6,10** | | **Fig. 7,8,9** | |
| 1 | Zulaufgas | 1 | Zulaufgas |
| 2 | Chlor, Restgase | 2 | Ausgangsgas |
| 3 | (chlorfreies) Ausgangsgas | C1 | Absorptionskolonne |
| 4 | (chlorhaltiges) Gas | 3,4 | Absorptionsmittel |
| C3,C1 | Tieftemperaturdestillation | 5 | Restgaskomponenten |
| C2 | Vakuum-Druckwechsel-adsorptions-(V-DWA-)Behälter C2a bis C2c | C2 | Desorptionskolonne |
| | | C3 | Seitenkolonne (Fig. 7,8), Chlorabsorptionsmittelwäsche (Fig.9) |
| 5 | Chlor | 6 | (flüssiges) Chlor |
| 6 | (hochreines) Chlor | 7 | Reingas |
| | | 8,9 | Waschflüssigkeit |
| | | 10 | Chlorabsorptionsmittel |

**Patentansprüche**

1. Verfahren zur Abtrennung von Chlor hoher Reinheit aus einem chlorhaltigen Zulaufgas durch Absorption des Chlors mit einem inerten Absorptionsmittel und nachgeschalteter Desorption des Chlors aus dem aus der Absorption abgezogenen Absorptionsmittel/ Chlorgemisch durch dessen Zufuhr zu einer Desorptionsdestillationskolonne, dadurch gekennzeichnet, daß die Desorptionsdestillation in einer Desorptionsdestillationskolonne durchgeführt wird, die mit einer Chlorabtrennkolonne derart gekoppelt ist, daß der Kopf der Chlorabtrennkolonne und ein oberer Teil der Desorptionsdestillations-kolonne und ein unterer Teil der Desorptionsdestillationskolonne und der Sumpf der Chlorabtrennkolonne sowohl gas- als auch flüssigkeitsseitig miteinander verbunden sind und die Zuführ des Absorptionsmittel/Chlorgemisches ausschließlich in die Desorptionsdestillationskolonne erfolgt und hochreines Chlor aus einem mittleren Bereich der Chlorabtrennkolonne abgezogen wird.

2. Verfahren nach Anspruch 1, dadurch gekennzeichnet, daß die Chlorabtrennkolonne eine Seitenkolonne ist, oder durch eine vertikal verlaufende Trennwand in der Desorptionsdestillationskolonne ausgebildet wird.

3. Verfahren nach den Anspruch 1 oder 2, dadurch gekennzeichnet, daß die Höhe des effektiven Teils der Chlorabtrennkolonne ≤ der Höhe des effektiven Teils der Desorptionsdestillationskolonne entspricht, insbesondere 10 - 90 %, vorzugsweise 60 - 70 % der Höhe.

4. Verfahren nach einem der Ansprüche 1 bis 3, dadurch gekennzeichnet, daß aus dem unteren Teil der Desorptionsdestillationskolonne Brüden in den Sumpf der Chlorabtrennkolonne geleitet werden und aus dem oberen Teil der Desorptionsdestillationskolonne Flüssigkeit auf den Kopf der Chlorabtrennkolonne geleitet wird und daß der Brüdenabzug aus der Chlorabtrennkolonne in der Höhe der Flüssigkeitsentnahme, aus der Desorptionsdestillationskolonne und daß der Sumpfabzug aus der Chlorabtrennkolonne in Höhe der Brüdenentnahme wieder in die Desorptionsdestillationskolonne zurückgeführt wird.

5. Verfahren nach Anspruch 4, dadurch gekennzeichnet, daß die Brüden der Desorptionsdestillationskolonne in die Stufe der Absorption des Chlors recycliert werden.

6. Verfahren nach einem der Ansprüchen 1 bis 5, dadurch gekennzeichnet, daß der aus der Absorption austretende und Absorptionsmittel enthaltende Gasstrom in einer Waschstufe mit Hilfe einer inerten Waschflüssigkeit, welche einen Dampfdruck von vorzugsweise weniger als 10 mbar bei Raumtemperatur, bevorzugt weniger als 1 mbar, aufweist, gewaschen wird und die beladene Waschflüssigkeit zur Regeneration in einer Desorptionsdestillationskolonne, vorzugsweise bei einem Druck von 0,1 - 5 bar, insbesondere 1 - 2 bar, destilliert wird, und die so regenerierte Waschflüssigkeit in die Waschstufe und das gewonnene Absorptionsmittel in die Stufe der Absorption des Chlors recycliert werden.

7. Verfahren zur Abtrennung von reinem Chlor aus einem chlorhaltigen Gasstrom, dadurch gekennzeichnet, daß der chlorhaltige Gasstrom zunächst einer Druckwechseladsorption unterworfen wird, das chlorhaltige Gas aus der Druckwechseladsorption auf einen Druck von 1 - 20 bar, bevorzugt 5 - 10 bar, komprimiert und anschließend einer Tieftemperaturdestillation unterworfen wird, wobei das Chlor in reiner Form als Sumpfprodukt der Destillationskolonne abgetrennt und das Kopfprodukt der Destillationskolonne in den Zulaufgasstrom der Druckwechseladsorption zurückgeführt wird.

8. Verfahren nach einem der Ansprüchen 1 bis 7 zur Behandlung eines chlorhaltigen Gasstromes, der aus der Oxidation von Chlorwasserstoff mit Sauerstoff resultiert.

9. Verfahren nach Anspruch 8, dadurch gekennzeichnet, daß der Chlorwasserstoff aus einer Isocyanatproduktion stammt und das abgetrennte Chlor hoher Reinheit zur Herstellung von Phosgen für die Isocyanatproduktion recycliert wird.

10. Verfahren nach Anspruch 8 oder 9, dadurch gekennzeichnet, daß aus der Stufe der Absorption des Chlors stammendes Ausgangsgas gegebenfalls nach Entfernung von mitgeschlepptem Absorptionsmittel in die Stufe der Oxidation von Chlorwasserstoff mit Sauerstoff recycliert wird.

**Claims**

1. A process for separating chlorine of high purity from a chlorine-containing feed gas by absorption of the chlorine using an inert absorbent and downstream desorption of the chlorine from the absorbent/chlorine mixture drawn off from the absorption stage by the supply of said mixture to a desorption distillation column, which comprises carrying out the desorption distillation in a desorption distillation column which is coupled to a chlorine separation column in such a way that the top of the chlorine separation column and an upper section of the desorption distillation column and a lower section of the desorption distillation column and the bottom of the chlorine separation column are connected to one another on both the gas and the liquid side, the absorbent/chlorine mixture being supplied exclusively to the desorption distillation column and high-purity chlorine being drawn off from a middle region of the chlorine separation column.

2. A process as claimed in claim 1, wherein the chlorine separation column is a side column or is formed by a vertically extending partitioning wall in the desorption distillation column.

3. A process as claimed in claim 1 or 2, wherein the height of the effective part of the chlorine separation column is less than or equal to the height of the effective part of the desorption distillation column, in particular 10-90 %, preferably 60-70 %, of the height.

4. A process as claimed in any one of claims 1 to 3, wherein vapors are passed from the lower part of the desorption distillation column into the bottom of the chlorine separation column and liquid is passed from the upper part of the desorption distillation column to the top of the chlorine separation column and wherein the vapors drawn off from the chlorine separation column are passed back into the desorption distillation column at the height of the withdrawal of liquid from the desorption distillation column and wherein the material drawn off at the bottom from the chlorine separation column is passed back into the desorption distillation column at the height of the withdrawal of vapors.

5. A process as claimed in claim 4, wherein the vapors of the desorption distillation column are recycled to the stage of absorption of the chlorine.

6. A process as claimed in any one of claims 1 to 5, wherein the gas stream emerging from the absorption stage and containing absorbent is scrubbed in a scrubbing stage with the aid of an inert washing liquid which has a vapor pressure of preferably less than 10 mbar at room temperature, particularly preferably less than 1 mbar, and the loaded washing liquid is distilled, for regeneration, in a desorption distillation column, preferably at a pressure of 0.1-5 bar, in particular 1-2 bar, and the washing liquid thus regenerated is recycled to the scrubbing stage and the recovered absorbent is recycled to the stage of absorption of the chlorine.

7. A process for the separation of pure chlorine from a chlorine-containing gas stream, wherein the chlorine-containing gas stream is initially subjected to a pressure swing adsorption, the chlorine-containing gas from the pressure swing adsorption is compressed to a pressure of 1-20 bar, preferably 5-10 bar, and is then subjected to a low-temperature distillation, the chlorine being separated off in pure form as the bottom product of the distillation column and the top product of the distillation column being passed back into the feed gas stream of the pressure swing adsorption.

8. A process as claimed in any one of claims 1 to 7 for the treatment of a chlorine-containing gas stream which results from the oxidation of hydrogen chloride with oxygen.

9. A process as claimed in claim 8, wherein the hydrogen chloride comes from the production of isocyanate and the high-purity chlorine separated off is recycled for the preparation of phosgene for the production of isocyanate.

10. A process as claimed in claim 8 or 9, wherein exit gas from the stage of absorption of the chlorine is recycled, with or without removal of entrained absorbent, into the stage of oxidation of hydrogen chloride with oxygen.

**Revendications**

1. Procédé de séparation de chlore à haute pureté à partir d'un gaz de départ contenant du chlore, par absorption du chlore au moyen d'un agent d'absorption inerte et désorption subséquente du chlore à partir du mélange de chlore/agent d'absorption par son introduction dans une colonne de distillation à désorption, caractérisé en ce que la distillation à désorption est entreprise dans une colonne de distillation à résorption couplée à une colonne de séparation de chlore de manière que la tête de la colonne de séparation de chlore et une partie supérieure de la colonne de distillation à désorption et une partie inférieure de la colonne de distillation à désorption, ainsi que le fond de la colonne de séparation de chlore sont reliés ensemble, tant du côté gaz que du côté liquide, et que l'amenée du mélange de chlore/agent d'absorption se fait exclusivement dans la colonne de distillation à désorption et que l'on extrait du chlore de haute pureté de la zone médiane de la colonne de séparation de chlore.

2. Procédé selon la revendication 1, caractérisé en ce que la colonne de séparation de chlore est une colonne latérale, ou est réalisée dans la colonne de distillation à désorption par une paroi de séparation verticale.

3. Procédé selon la revendication 1 ou 2, caractérisé en ce que la hauteur de la partie efficace de la colonne de séparation de chlore est égale ou inférieure à la hauteur de la partie efficace de la colonne de distillation à désorption, en particulier de 10 à 90%, et de préférence de 60 à 70% de la hauteur.

4. Procédé selon l'une des revendications 1 à 3, caractérisé en ce que, à partir de la partie inférieure de la colonne de distillation, des vapeurs sont envoyées dans le fond de la colonne de séparation de chlore et qu'à partir de la partie supérieure de la colonne de distillation à désorption, un liquide est envoyé en tête de la colonne de séparation de chlore et que l'extraction des vapeurs de la colonne de séparation de chlore est renvoyée dans la colonne de distillation à désorption à hauteur du prélèvement de liquide et que l'extraction de fond de colonne de la colonne de séparation de chlore est renvoyée dans la colonne de distillation à désorption à hauteur du prélèvement de vapeurs.

5. Procédé selon la revendication 4, caractérisé en ce que les vapeurs de la colonne de distillation à désorption sont recyclées dans l'étape d'absorption du chlore.

6. Procédé selon l'une des revendications 1 à 5, caractérisé en ce que le courant gazeux provenant de l'absorption et contenant de l'agent d'absorption est lavé lors d'une étape de lavage au moyen d'un liquide de lavage inerte, présentant une pression de vapeur inférieure à 10 mbar à température ambiante, de préférence inférieure à 1 mbar, et que le liquide de lavage chargé est distillé aux fins de régénération dans une colonne de distillation à désorption, de préférence à une pression de 0,1 à 5 bar, en particulier de 1 à 2 bar, et que le liquide de lavage ainsi régénéré est recyclé dans l'étape de lavage et l'agent d'absorption récupéré est recyclé dans l'étape d'absorption du chlore.

7. Procédé de séparation de chlore pur à partir d'un courant de gaz contenant du chlore, caractérisé en ce que le courant de gaz chloré est d'abord soumis à une adsorption à alternances de pression sous une pression de 1 à 20 bar, de préférence de 5 à 10 bar, comprimé et soumis ensuite à une distillation à basse température, le chlore étant séparé sous forme pure en tant que produit de fond de colonne de la colonne de distillation et le produit de tête de la colonne de distillation étant renvoyé dans le courant de gaz d'amenée de l'adsorption à alternances de pression.

8. Procédé selon l'une des revendications 1 à 7 pour le traitement d'un courant de gaz contenant du chlore, provenant de l'oxydation d'acide chlorhydrique par de l'oxygène.

9. Procédé selon la revendication 8, caractérisé en ce que le gaz chlorhydrique provient d'une production d'isocyanate et que le chlore séparé à haute pureté est recyclé pour la préparation de phosgène en vue de la production d'isocyanate.

10. Procédé selon la revendication 8 ou 9, caractérisé en ce que le gaz de sorte de l'étape d'absorption du chlore est éventuellement recyclé dans l'étape d'oxydation d'acide chlorhydrique après élimination de l'agent d'absorption entraîné.

Fig. 2

Fig. 1

Fig. 3

Fig. 4

EP 0 767 138 B1

**Fig. 5**

T2 < T1 < 0 °C

Fig. 6

EP 0 767 138 B1

Fig. 7

18

EP 0 767 138 B1

Fig. 8

19

Fig. 9

EP 0 767 138 B1

Fig. 10

EP 0 767 138 B1